# EUROPEAN PATENT APPLICATION

(11) **EP 1 930 755 A1**
(43) Date of publication of application: **11.06.2008**
(21) Application number: 06767042.2
(22) Date of filing: 21.06.2006
(51) Int. Cl.: G02B 6/122, G02B 6/13, G02B 6/42

(54) **OPTICAL WAVEGUIDE DEVICE AND METHOD FOR FABRICATING OPTICAL WAVEGUIDE DEVICE**

(30) Priority: 30.09.2005 JP 2005286723
(71) Applicant: Mitsumi Electric Co., Ltd., Tama-shi, Tokyo 206-8567 (JP)
(72) Inventor: ONO, Tadashi, Tama-shi Tokyo 206-8567 (JP)
(74) Representative: Grünecker, Kinkeldey, Stockmair & Schwanhäusser Anwaltssozietät
(86) International application number: PCT/JP2006/312383
(87) International publication number: WO 2007/039964

(57) **Abstract**

An optical waveguide device in which optical loss is reduced. An optical waveguide film cable (1) is constituted of a light-emitting element (3), a light-receiving element (5), and an optical guide member (6). The optical guide member (6) has a film-like shape and a substantially U-shaped core section (10) is formed in a clad section (9). Mirror faces (18, 19) having an inclination angle of 45° are formed on a shoulder portion (16) located at the continuous portion of a body portion (13) and a light inlet portion (14), and on a shoulder portion (17) located at the continuous portion of the body portion (13) and a light exit portion (15). Light emitted from the light-emitting element (3) propagates through the light inlet portion (14) of the core section (10) and is reflected totally by the mirror surface (18). Light subjected to optical path change by 90° on the mirror surface (18) propagates through the body portion (13) of the core section (10) and is reflected totally by the mirror surface (19). Light subjected to optical path change by 90° on the mirror surface (19) propagates through the exit portion (15) of the core section (10) and is received by the light-receiving element (5).

## Description

### Technical Field

The present invention relates to an optical waveguide device and a method for fabricating an optical waveguide device.

### Background Art

Recently, as a component for optical communication, an optical waveguide device which uses polymer resin material is used. In order to change a direction of optical wiring in an optical waveguide, a technique where an end of the optical waveguide forms an inclination surface by 45° and the inclination surface bends an optical path in a right angle is developed (for example, Patent Document 1).

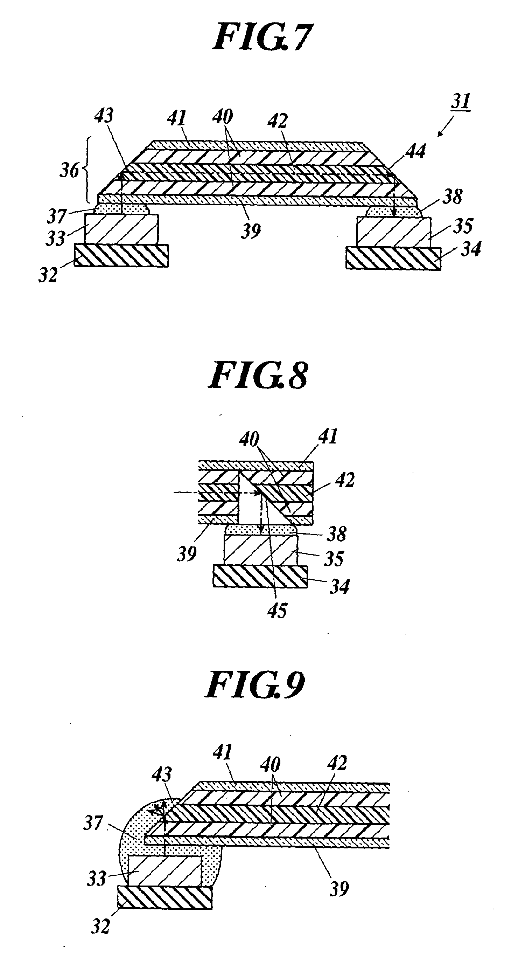

Fig. 7 shows a cross-sectional view of an optical waveguide device 31. As shown in Fig. 7, the optical waveguide device 31 is constituted of a light-emitting element 33 provided on a substrate 32, a light-receiving element 35 provided on a substrate 34, and an optical guide member 36 for guiding the light. The light-emitting element 33 and an optical guide member 36, and the light-receiving element 35 and the optical guide member 36 are adhered to each other with optical path members 37, 38 respectively.

The optical guide member 36 includes, from the bottom, a protective layer 39, a clad section 40, and a protective layer 41, and a core section 42 with a higher refractive index than the clad section 40 is formed in the clad section 40. Mirror faces 43, 44 having an inclination angle of 45° are formed on both ends of the optical guide member 36. The mirror faces 43, 44 are formed by cutting using an angled blade having an inclination angle on its blade edge. As shown in FIG. 7, light emitted from the light-emitting element 33 is reflected totally by the mirror face 43 and progresses through the core section 42. Then, the light is reflected totally by the mirror face 44 and is received by the light-receiving element 35.

Other than the total reflection mirror method shown in FIG. 7, a mirror block method for changing an optical path as shown in FIG. 8 is used. In FIG. 8, the same reference numerals are applied to the same components as in FIG. 7, and description of the structure is omitted. As shown in Fig. 8, the light which propagated through the core section 42 is reflected by the mirror face 45 and the light is received by the light-receiving element 35. In the mirror block method, it is preferable to coat the surface of the mirror face 45 with metal in order to increase reflection efficiency.
Patent Document 1: Japanese Patent Application Laid-Open Publication No. 2001-166167

### Disclosure of the Invention

### Problems to be Solved by the Invention

However, in Fig. 7, in order for the light emitted from the light-emitting element 33 to reach the core section 42, the light needs to pass through the optical path member 37, the protective layer 39, and the clad section 40, causing light loss through optical diffusion and interface reflection. Similarly, light loss occurred when the light reached the light-receiving element 35 from the core section 42. In order to prevent light loss, highly accurate adjustment of the position in the height direction was necessary.

Since the mirror faces 43, 44 totally reflect the light with a refractive index difference between the core section 42 and air, as shown in FIG. 9, there was a problem of when the optical path member 37 adheres to the mirror face 43, the light leaks. Also, the mirror faces 43, 44 are formed by cutting using an angled blade, in which rotary instability easily occurs due to blade thickness, and it was necessary to carefully control the accuracy of the angle.

The present invention has been made in consideration of the above problems of the techniques, and it is an object to reduce light loss in an optical waveguide device.

### Means for Solving the Problem

In order to achieve the above object, according to a first aspect of the present invention, there is provided an optical waveguide device, comprising:
an optical guide member extending in an optical guide direction with a core section in a clad section, wherein
the core section is formed in a substantial U-shape of a two-dimensional shape including;
a body portion; and
light inlet and exit portions which protrude from both ends of the body portion in a direction substantially orthogonal to the body portion;
inclined planes are formed on shoulder portions located at continuous portions of the body portion and the light inlet and exit portions; and
the inclined planes of the core section are exposed outside.

Preferably, the optical guide member is formed in a film-like shape.

Preferably, ends of the light inlet and exit portions of the core section are provided with photoelectric conversion elements to perform a conversion between light and electricity.

Preferably, one of the photoelectric conversion elements provided on one end of the light inlet and exit portions is a light-emitting element, and the other of the photoelectric conversion elements provided on the other end of the light inlet and exit portions is a light-receiving element.

According to a second aspect of the present invention, there is provided a method for fabricating an optical waveguide device, comprising the steps of:
forming a first clad layer;
forming a core section formed in a substantial U-shape of a two-dimensional shape on the first clad layer, including a body portion and light inlet and exit portions which protrude from both ends of the body portion in a direction substantially orthogonal to the body portion, in which inclined planes are formed on shoulder portions located at continuous portions of the body portion and the light inlet and exit portions;
forming a second clad layer which covers the core section and has a refractive index as same as the first clad layer; and
exposing the inclined planes of the core section outside.

Preferably, the inclined planes of the core section are exposed by cutting the first clad layer and the second clad layer in a direction orthogonal to the layers.

Preferably, the inclined planes of the core section are exposed by etching processing performed on the first clad layer and the second clad layer.

### Advantageous Effect of the Invention

According to the present invention, by totally reflecting light on an inclined plane and propagating the light along the substantially U-shaped core section, the light may be directly introduced to the core section from a substantially orthogonal direction to the optical guide direction, and the light directly exits from the core section in a direction substantially orthogonal to the optical guide direction. Consequently, since the light does not pass through a portion where a refractive index is different, scattering and reflecting on an interface can be avoided, and optical loss can be reduced.

### Brief Description of the Drawings

FIG. 1 is a perspective view showing an optical waveguide film cable 1 of the embodiment of the present invention;
FIG. 2 is a cross-sectional view showing the optical waveguide film cable 1;
FIG. 3A is a diagram for describing a forming of a clad layer 9a;
FIG. 3B is a diagram for describing a forming of a core layer 10a;
FIG. 3C is a diagram for describing a forming of a core section 10;
FIG. 3D is a diagram showing a shape of the core section 10;
FIG. 4A is a diagram for describing a method of forming the clad layer 9b and a protective layer 12;
FIG. 4B is a diagram showing a cross-section taken along A-A shown in FIG. 4A;
FIG. 5A is a perspective view showing layers by cutting out in a rectangular shape to include the core section 10;
FIG. 5B is a top view showing layers by cutting out in a rectangular shape to include the core section 10;
FIG. 6A is a perspective view showing mirror faces 18, 19 in an exposed state;
FIG. 6B is a top view showing the mirror faces 18, 19 in an exposed state;
FIG. 7 is a cross-sectional view showing an optical waveguide device 31;
FIG. 8 is a diagram for describing a mirror block method to change an optical path; and
FIG. 9 is a diagram for describing a problem in the optical waveguide device 31.

### Best Mode for Carrying Out the Invention

An embodiment of the present invention will be specifically described with reference to the drawings.

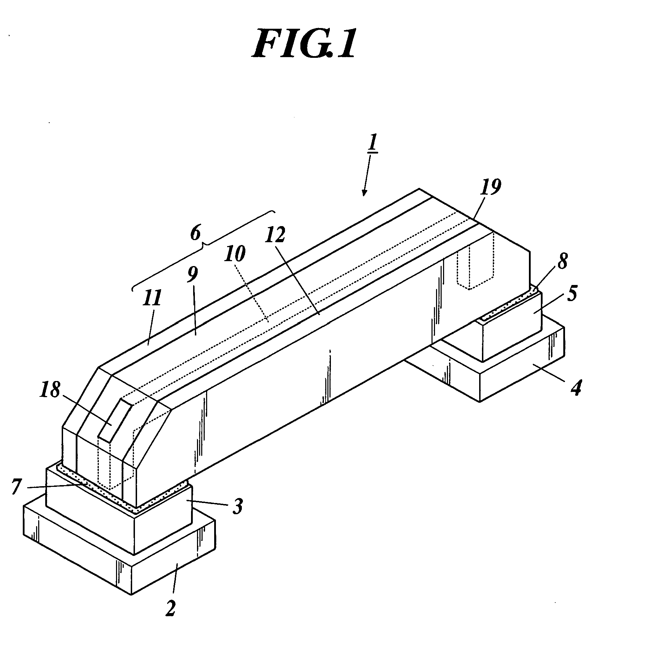

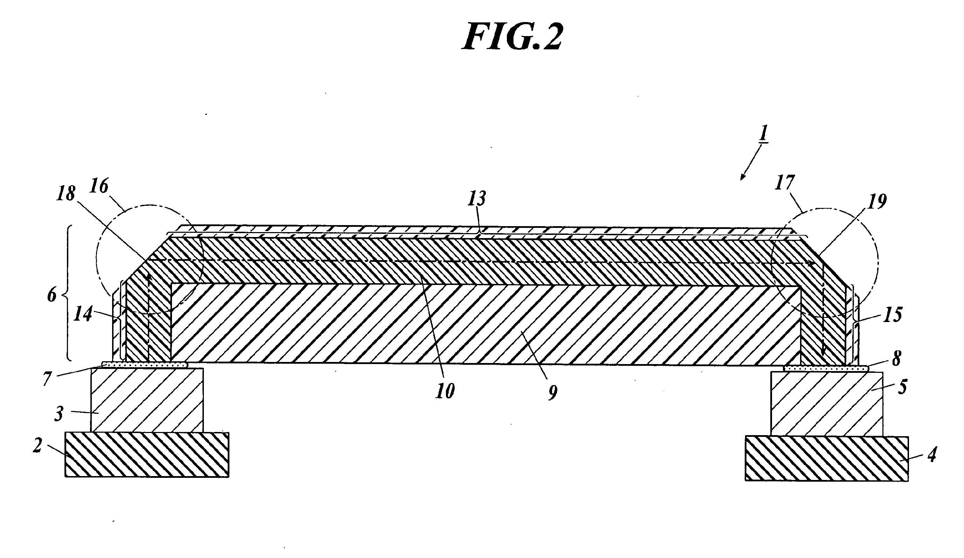

FIG. 1 is a perspective view showing an optical waveguide film cable 1 of the embodiment of the present invention and FIG. 2 is a cross-sectional view of the optical waveguide film cable 1. As shown in FIG. 1 and FIG. 2, the optical waveguide film cable 1 is constituted of a light-emitting element 3 provided on a substrate 2, a light-receiving element 5 provided on a substrate 4 and an optical guide member 6 extending in an optical guide direction (in FIG. 2, right direction). The light-emitting element 3 and the optical guide member 6, and the light-receiving element 5 and the optical guide member 6 are adhered with each other by optical path members 7, 8 respectively. The optical path members 7, 8 have a function to adhere and fix the light-emitting element 3 and the light-receiving element 5 to the optical guide member 6 and a function as a refractive medium to stabilize transmission of light.

The optical guide member 6 has a film-like shape and flexibility, and is constituted of a clad section 9, a core section 10 formed in the clad section 9 and protective layers 11, 12. A refractive index of the core section 10 is higher than a refractive index of the clad section 9 and a refractive index of air. Thus, the light propagated through the core section 10 is totally reflected at the interface with the clad section 9 or the air. A side face of the clad section 9 is covered with protective films 11, 12.

As shown in FIG. 2, the core section 10 includes a body portion 13 extending in an optical guide direction, and a light inlet portion 14 and a light exit portion 15 protruding from both ends of the body portion 13 in a direction substantially orthogonal to the body portion 13, and is formed in a substantial U-shape. The light inlet portion 14 and the light exit portion 15 are the light inlet and exit portions described in the claims. Mirror faces 18, 19 which are inclined planes having an inclination angle of 45° are formed on a shoulder portion 16 located at the continuous portion of a body portion 13 and a light inlet portion 14, and on a shoulder portion 17 located at the continuous portion of the body portion 13 and a light exit portion 15, respectively. The core section 10 is exposed outside the clad section 9 and in contact with the outside air at these mirror faces 18, 19. A cross-section of the core section 10 in a direction perpendicular to the direction light propagates through the core section 10 is formed in a square shape.

The light-emitting element 3 is provided on an end of the light inlet section 14. The light-emitting element 3 is constituted of, for example, a surface emitting semiconductor laser (VCSEL: Vertical Cavity Surface Emitting Laser), and according to an electrical signal supplied externally, emits light in a direction perpendicular to the contact face with the optical guide member 6 (in FIG. 2, upward).

The light-receiving element 5 is provided on an end of the light exit portion 15. The light-receiving element 5 is constituted of, for example, PD (PhotoDiode) and receives light in a direction perpendicular to the contact face with the optical guide member 6 (in FIG. 2, downward) to convert to an electrical signal.

As shown in FIG. 2, the light emitted from the light-emitting element 3 propagates through the light inlet portion 14 of the core section 10 and is reflected totally by the mirror face 18. Light subjected to optical path change by 90° on the mirror face 18 propagates through the body portion 13 of the core section 10 and is reflected totally by the mirror surface 19. Light subjected to optical path change by 90° on the mirror surface 19 propagates through the light exit portion 15 of the core section 10 and is received by the light-receiving element 5.

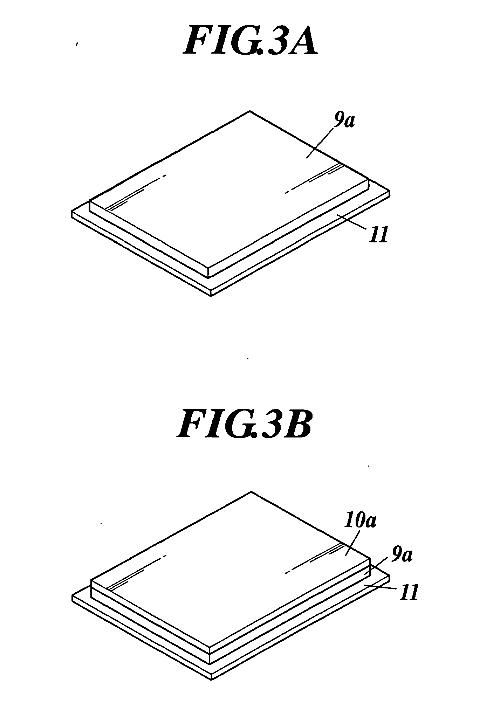

Next, a method for fabricating an optical waveguide film cable 1 will be described with reference to FIG. 3A, FIG. 3B, FIG. 3C, FIG. 3D, FIG. 4A, FIG. 4B, FIG. 5A, FIG. 5B, FIG. 6A and FIG. 6B.

First, as shown in FIG. 3A, a resin thin film in a liquid state is formed on the protective film 11 with a rotating film formation method, etc., and the film is heated to form a clad layer 9a. The protective film 11 is constituted of a resin film, for example, polyimide, PET, etc. The clad layer 9a includes polymeric resin material with optical transparency, and is constituted of, for example, epoxy resin, acrylic resin, imide resin, etc.

Then, as shown in FIG. 3B, a resin thin film in a liquid state is formed on the clad layer 9a with a rotating film formation method, etc., and the film is heated to form a core layer 10a with a higher refractive index than the clad layer 9a. The core layer 10a includes polymeric resin material with optical transparency and is constituted of, for example, epoxy resin, acrylic resin, imide resin, etc.

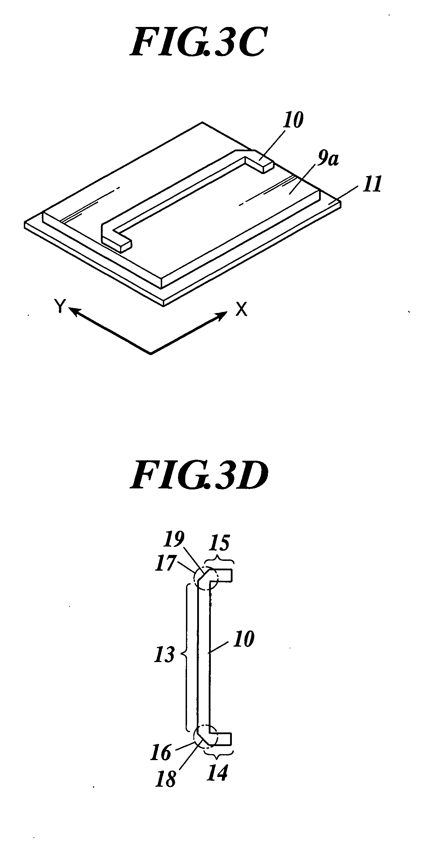

Next, a mask is applied to the core layer 10a, and as shown in FIG. 3C, a core pattern of the core section 10 is formed in a two-dimensional state with photolithography and etching processing. "Formed in a two-dimensional state" means to form a two-dimensional pattern with a plane parallel to an XY plane including arrows X, Y shown in FIG. 3C. In short, the core section 10 is formed along a plane of the clad layer 9a. As shown in FIG. 3D, the core section 10 is substantially U-shaped, includes the body portion 13, the light inlet portion 14 and a light exit portion 15 and includes mirror faces 18, 19 on a shoulder portion 16 located at the continuous portion of a body portion 13 and a light inlet portion 14, and on a shoulder portion 17 located at the continuous portion of the body portion 13 and a light exit portion 15, respectively.

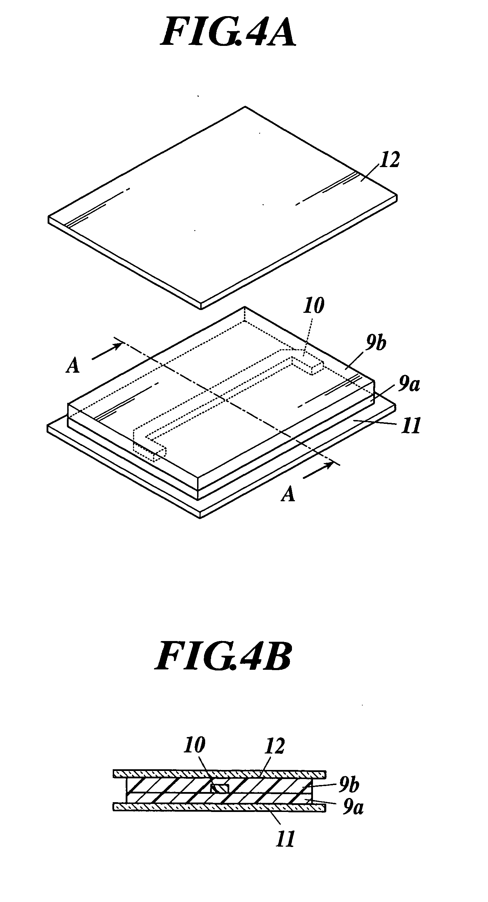

Next, as shown in FIG. 4A, a resin thin film in a liquid state is formed with a rotating film formation method, etc., and the film is heated to cover the core section 10 with a material which has a refractive index as same as the clad layer 9a to form a clad layer 9b. It is preferable that the clad layer 9b is formed with a material with a same composition as the clad layer 9a. As shown in FIG. 4a, a protective film 12 is formed on the clad layer 9b. The protective film 12 is constituted of a resin film, for example, polyimide, PET, etc. FIG. 4B shows a cross-section taken along A-A shown in FIG. 4A.

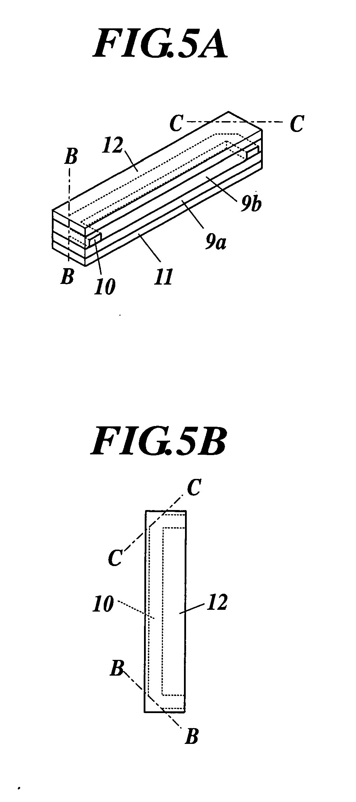

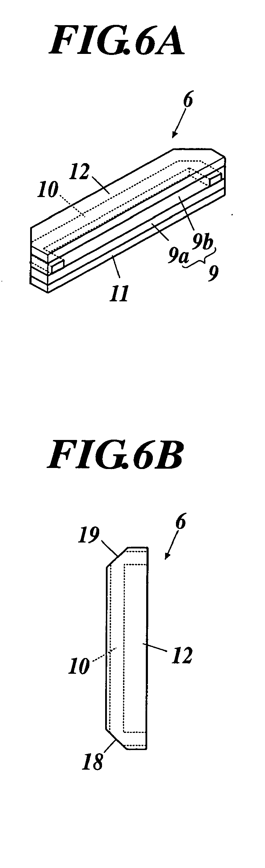

FIG. 5A and FIG. 5B are a perspective view and a top view showing layers shown in FIG. 4A by cutting out in a rectangular shape to include core section 10. By processing the layers perpendicular to the layers at the position of B-B, C-C shown in FIG. 5A and FIG. 5B, the mirror faces 18, 19 of the core section 10 are exposed to the outside. In this way, an optical guide member 6 shown in FIG. 6A and FIG. 6B is completed. The clad layer 9a and the clad layer 9b shown in FIG. 6A correspond to the clad section 9 shown in FIG. 1 and FIG. 2.

The protective layer 11, the clad layer 9a, the clad layer 9b and the protective layer 12 may be cut in a direction perpendicular to the layers with a dicer or a laser as a method of processing for exposing the mirror faces 18, 19. The unnecessary portions may also be dissolved by liquid phase etching or gas phase etching processing on the layers, protective layer 11, the clad layer 9a, the clad layer 9b and the protective layer 12.

As shown in FIG. 1 and FIG. 2, by adhering the light-emitting element 3 and the light-receiving element 5 to the optical guide member 6 with optical path members, 7, 8, the optical waveguide film cable 1 is completed.

As described above, according to the present embodiment, by totally reflecting light by mirror faces 18, 19 and propagating the light along a core section 10 substantially U-shaped, the light may be directly introduced to the core section 10 from a substantially orthogonal direction to the optical guide direction, and the light may directly exit from the core section 10 in a substantially orthogonal direction to the optical guide direction. Consequently, since the light does not pass through a portion where a refractive index is different, scattering and reflecting on an interface may be avoided, and optical loss may be reduced. Also, the length of the light inlet portion 14 and the light exit portion 15 of the core section 10 may be set freely.

When the mirror faces 18, 19 are exposed by cutting with a dicer, since the processing may be performed with the same thin blade as used in cutting the external form of the optical guide member 6, processing with high accuracy may be easily performed, and a number of steps such as changing blades, etc. may be reduced compared to the method of processing using an angled blade.

The above-described embodiment is an example of the optical waveguide device of the present invention, and thus is not limited to the embodiments shown. Details of the components constituting the optical waveguide film cable 1 may be modified without leaving the scope of the invention.

For example, in the above-described embodiment, the angle of the mirror faces 18, 19 are formed at 45°, however, the angle of the mirror faces 18, 19 are not limited to this angle, and the angle may be adjusted to an angle so that the light loss becomes a minimum according to a characteristic of the light-emitting element 3 or the light-receiving element 5. In the above-described embodiment, the substantially U-shaped core section 10 is formed in a two-dimensional shape, however, the shape is not limited to a U-shape, and a V-shaped, M-shaped, N-shaped, etc. two-dimensional pattern may be formed.

The method of forming the core pattern is not limited to photolithography and etching processing, and direct lithography may also be used.

In the above-described embodiment, the light-emitting element 3 and the light-receiving element 5 are respectively provided on different substrates 2, 4, however, the light-emitting element 3 and the light-receiving element 5 may be provided on the same substrate.

### Industrial Applicability

The optical waveguide device and the method for fabricating the optical waveguide device of the present invention may be applied to the field of optical communication.

### Description of Reference Numerals

- 1: optical waveguide film cable (optical waveguide device)
- 3: light-emitting element
- 5: light-receiving element
- 6: optical guide member
- 7, 8: optical path members
- 9: clad section
- 9a: clad layer (first clad layer)
- 9b: clad layer (second clad layer)
- 10: core section
- 10a: core layer
- 11, 12: protective layers
- 13: body portion
- 14: light inlet portion (light inlet and exit portion)
- 15: light exit portion (light inlet and exit portion)
- 16, 17: shoulder portions
- 18, 19: mirror faces (inclined planes)
- 31: optical waveguide device
- 33: light-emitting element
- 35: light-receiving element
- 36: optical guide member
- 37, 38: optical path member
- 39: protective layer
- 40: clad section
- 41: protective layer
- 42: core section
- 43, 44: mirror faces
- 45: mirror face

## Claims

1. An optical waveguide device comprising:
an optical guide member extending in an optical guide direction with a core section in a clad section, wherein
the core section is formed in a substantial U-shape of a two-dimensional shape including;
a body portion; and
light inlet and exit portions which protrude from both ends of the body portion in a direction substantially orthogonal to the body portion;
inclined planes are formed on shoulder portions located at continuous portions of the body portion and the light inlet and exit portions; and
the inclined planes of the core section are exposed outside.

2. The optical waveguide device according to claim 1, wherein the optical guide member is formed in a film-like shape.

3. The optical waveguide device according to either claim 1 or 2, wherein ends of the light inlet and exit portions of the core section are provided with photoelectric conversion elements to perform a conversion between light and electricity.

4. The optical waveguide device according to claim 3, wherein, one of the photoelectric conversion elements provided on one end of the light inlet and exit portions is a light-emitting element, and the other of the photoelectric conversion elements provided on the other end of the light inlet and exit portions is a light-receiving element.

5. A method for fabricating an optical waveguide device, comprising the steps of:
forming a first clad layer;
forming a core section formed in a substantial U-shape of a two-dimensional shape on the first clad layer, including a body portion and light inlet and exit portions which protrude from both ends of the body portion in a direction substantially orthogonal to the body portion, in which inclined planes are formed on shoulder portions located at continuous portions of the body portion and the light inlet and exit portions;
forming a second clad layer which covers the core section and has a refractive index as same as the first clad layer; and
exposing the inclined planes of the core section outside.

6. A method for fabricating an optical waveguide device according to claim 5, wherein the inclined planes of the core section are exposed by cutting the first clad layer and the second clad layer in a direction orthogonal to the layers.

7. A method for fabricating an optical waveguide device according to claim 5, wherein the inclined planes of the core section are exposed by etching processing performed on the first clad layer and the second clad layer.
